# EUROPEAN PATENT SPECIFICATION

(11) **EP 2 670 561 B1**
(45) Date of publication and mention of the grant of the patent: **14.10.2020**
(21) Application number: 11857468.0
(22) Date of filing: 01.02.2011
(51) Int. Cl.: B23K 31/00, B23K 31/02, C21D 9/08, C21D 9/50, C21D 1/34, B23K 101/06

(54) **APPARATUS FOR AND METHOD OF POST HEAT TREATING PIPE OR WELD JOINTS**
VORRICHTUNG UND VERFAHREN ZUR WÄRMENACHBEHANDLUNG VON ROHR- ODER SCHWEISSVERBINDUNGEN
APPAREIL ET PROCÉDÉ POUR LE POST-TRAITEMENT THERMIQUE DE JOINTS DE SOUDURE OU DE JOINTS DE TUYAUX

(43) Date of publication of application: 11.12.2013
(73) Proprietor: Baiekur Coils Ltd., Wabamum, Alberta T0E 2K0 (CA)
(72) Inventor: Regan, Colin A., Wabumum, Alberta T0E 2K0 (CA)
(74) Representative: Baker, Thomas Edward
(86) International application number: PCT/CA2011/000115
(87) International publication number: WO 2012/103621

(56) References cited:
- EP-A1- 2 022 598
- WO-A1-91/15092
- WO-A2-2007/027580
- US-A- 4 165 457
- US-A- 4 278 876
- US-A- 4 687 911
- US-A1- 2003 040 842
- US-A1- 2008 105 671
- US-A1- 2008 105 671

## Description

The present invention relates to a heating apparatus for and a method of heating a metal pipe or a metal pipe weld joint according to the preamble of claims 1 and 9 respectively (see for example US 2008/105671 A1).

### BACKGROUND

For the purposes of this specification, the terms set out below are defined as follows.

The term "post weld treatment heating" refers to the operation of post weld heating a section of pipe to the desired temperature after performing a welding operation upon a section of pipe. For example, in a post weld heating operation using P91 chrome-moly steel pipe, the pipe is heated to a temperature range between 93 - 546 degrees Celcius (200 - 1015 degrees Fahrenheit). The term "P91" is used to describe a common type of pipe used in a high-pressure application for transporting oil, gas, or steam. P91 is comprised of a chromium-molybdenum alloy having the chemical composition of 9Cr-1Mo-V (P91).

The term "hydrogen bake-out" refers to a finishing operation on a weld whereby a welded section of pipe in-situ is held at a constant temperature in order to remove any hydrogen impurities from the weld in preparation for a cutting or welding operation. A hydrogen bake-out helps prevent the weld-joint from pre-mature fracturing of the weld-joint or pipe in-situ.

The term "interpass temperature" refers to the temperature of the pipe between welding passes. A "welding pass" is the path taken by a single welding operation. For example, a welding pass for a section of pipe is the circumferential path taken around a weld joint for the pipe.

US Patent Publication No. 2008/0105671 discloses a prior art heating apparatus without any automated control for heating operation. International Application No. WO 91/15092 discloses a prior art heat controller for heat treating metal. Many of the prior art inventions for heating pipe are difficult and cumbersome to apply, remove or relocate from the weld area, which typically may be held within a tightly confined area. Additionally, many of the prior art inventions require a power source requiring the use of heavy machinery to provide a suitable source of power. For example, a generator truck is typically required for voltage requirements exceeding 480-600 volts. Each truck uses heavy cabling to supply power from the generator mounted on the truck to the heating apparatus, which is typically located in a remote location from the weld site. The heavy cabling may present a hazard at the work site since the use of heavy voltage cabling present a safety hazard.

It is, therefore, desirable, to provide a portable heating apparatus for heat treating a section of oilfield pipe that is easy to use and that does not pose a worksite safety hazard.

### SUMMARY

A heating apparatus for and a method of heating a metal pipe or a metal pipe weld joint according to the present invention are defined respectively in claims 1 and 9.

Further embodiments of the present invention are defined in the dependent claims.

### BRIEF DESCRIPTION OF THE DRAWINGS

Figure 1 is an exploded perspective view depicting a general embodiment of a heating apparatus of a heating collar.
Figure 2A is a top plan cutaway view depicting the inner core of the heating apparatus of Figure 1.
Figure 2B is a top plan view depicting the heat transfer element of the heating apparatus of Figure 1.
Figure 2C is a top plan view depicting the outer cover of the heating apparatus of Figure 1.
Figure 3A is a cross-sectional view depicting a heating collar including the heating apparatus of Figure 1.
Figure 3B is a cross-sectional view depicting the heating collar of Figure 3A with fastening means.
Figure 4 is an electrical schematic depicting the electrical circuitry of an embodiment of a heating collar.
Figure 5 is a perspective view depicting the heating coils of a heating collar.
Figure 6 is a perspective view depicting an alternate embodiment of a heating collar.
Figure 7 is a perspective view depicting the heating collar of Figure 6 in an open position and having a spring-loaded button fastening mechanism.
Figure 8 is a front elevation view depicting the heating collar of Figure 6 in a closed position and having a thumb-catch fastening mechanism.
Figure 9A is a perspective view depicting the heating collar of Figure 6 in an open position and having a lynch pin fastening mechanism.
Figure 9B is a perspective view depicting the heating collar of Figure 9A with the lynch pin inserted.
Figure 9C is a perspective view depicting the heating collar of Figure 9A with the lynch pin fully inserted.
Figure 10 is a perspective view depicting a heating apparatus with a programmable temperature controller.
Figure 11 is a top plan view depicting the apparatus of Figure 10.
Figure 12 is a block diagram depicting an electric schematic of the circuit of the apparatus of Figure 11.

### DETAILED DESCRIPTION OF EMBODIMENTS

An apparatus and method for heat-treating pipe or weld joints is provided.

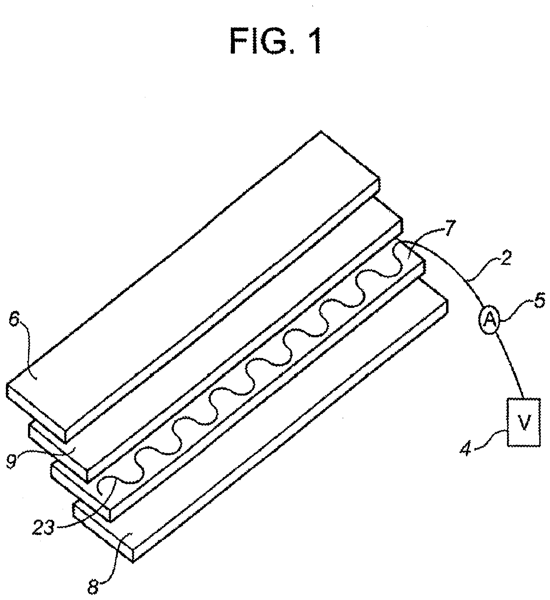

Referring to Figure 1, an embodiment of heating apparatus 10 is shown. According to the present invention, the heating apparatus 10 comprises thermally conductive heating element 2, power source 4, and programmable temperature control mechanism 5 for controlling the voltage and current supplied to heating element 2.

Heating element 2 comprises resistive wire heating element 23. Wire heating element 23 can provide a mechanism for transferring electrical potential energy into thermal energy. Accordingly, heating element 2 further comprises thermally conductive inner core 7 for absorbing, containing, and transferring thermal energy from wire heating element 23 to heat transfer medium 8. According to the present invention, heat transfer medium 8 is contiguous with inner core 7. Heat transfer medium 8 absorbs thermal energy from inner core 7 and transfers the thermal energy absorbed from inner core 7 to the surface of the metal piping when apparatus 10 is wrapped around a pipe to be heat-treated. Heat transfer medium 8 can comprise a thermally conductive substrate, such as metal, to provide an inner liner for covering and protecting inner core 7 from damage.

According to the present invention, inner core 7 is covered by outer cover shell or layer 9, which can support heating element 23 and protect heating element 23 from direct contact with the welding operator. Outer layer 9 is, according to the present invention, covered by thermally non-conductive cover 6 for protecting the hand of the welding operator from direct contact with heating element 23. In some embodiments, heating apparatus 10 can further comprise an insulated blanket (not shown) to cover up to 6" of pipe on both sides of heating apparatus 10 plus the apparatus itself.

An exploded view of the spatial relationship of heating element 23, inner core 7, heat transfer medium 8, outer layer 9, and cover 6 is shown in Figure 1. Inner core 7 can be sandwiched between heat transfer medium 8 and outer layer 9. Heating element 23 can be supported by inner core 7 and can be contiguous with both transfer medium 8 and outer layer 9. Cover 6 can provide a protective "wrapper" for the "sandwich".

For the purposes of this specification and the claims contained herein, the term "contiguous" is used to mean that inner core 7, transfer medium 8, and outer layer 9 can be situated in combination so as to be in contact with each other. The greater the surface area of inner core 7 that is in contact with the surface area of transfer medium 8, the greater the thermal energy transfer that can occur between inner core 7 and transfer medium 8.

It should be apparent to one skilled in the art that inner core 7, transfer medium 8 and outer layer 9 can be of any suitable physical configuration so long as inner core 7 is sandwiched between transfer medium 8 and outer layer 9 with no gaps therebetween in order to enable the heating functionality of apparatus 10.

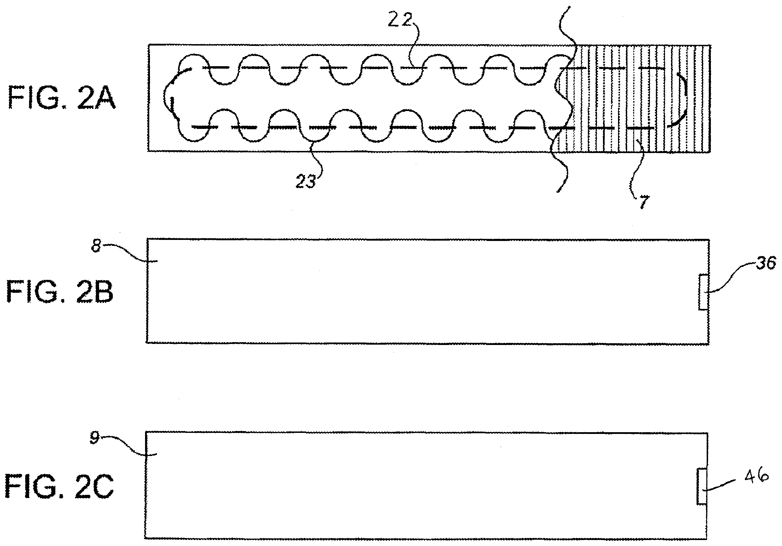

A cutaway view of a heating collar is shown in Figure 2A. Each collar can comprise inner core 7. Inner core 7 can be heated by induction by heating element 22. Heating element 22 can comprise coil wire heating element 23. In some embodiments, wire heating element 23 can comprise a high resistance wire that can provide a heat source to inner core 7 when an electrical current passes through heating element 23.

In some embodiments, inner core 7 can comprise a ceramic material, as well known to those skilled in the art. Ceramic material can be used for inner core 7 because of the thermal ability of ceramic material to efficiently absorb, retain, and transfer heat directly from the heating element to the weld site. It should be obvious to those skilled in the art, however, that inner core 7 can comprise any suitable material for absorbing, retaining and transferring heat. As required by the pre-welding operation, a method is required for consistently controlling a welding parameter such as temperature.

Ceramic inner core 7 can provide a consistent heat source for the piping since the flow and transfer of heat from inner core 7 to the piping can be controlled by thermostatic control mechanism 5 as shown in Figure 1. In some embodiments, inner core 7 can be heated to a specific temperature by controlling the voltage and current applied to wire heating element 23. Conversely, inner core 7 can easily be cooled down to a specific temperature by controlling the voltage and current applied to wire heating element 23.

The heating collars of apparatus 10 can further comprise heat transfer medium 8 as shown in Figure 2B. Heat transfer medium 8 can provide a thermally conductive material for transferring thermal energy from inner core 7. Heat transfer medium 8 can be capable of transferring thermal energy from inner core 7 to metal piping that is to be heat-treated. Additionally, heat transfer medium 8 can include opening 36 formed on the surface of heating transfer medium 8 for housing control mechanism 5 as shown in Figure 1.

In some embodiments, heat transfer medium 8 can be made of galvanized sheet metal. The sheet metal can provide an efficient heat transfer substrate and can be formed into the desired shape of the piping.

The heating collars of apparatus 10 can further comprise outer layer 9 as shown in Figure 2C. Outer layer 9 can also provide a protective outer covering for housing heating element 22, ceramic inner core 7 and heat transfer medium 8. Outer layer 9 can provide a safety barrier to help protect the hands of the welding operator from direct contact with heating element 22. Additionally, outer layer 9 can include housing 46 for holding the wiring (not shown) and programmable temperature control mechanism 5 as shown in Figure 1.

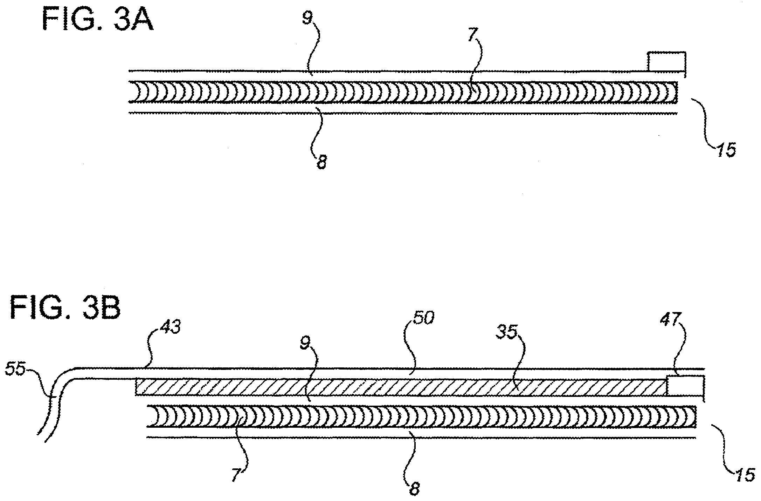

Referring to Figures 3A and 3B, a cross-sectional view of heating collar 15 is shown. In some embodiments, inner core 7 can be spaced substantially parallel and contiguous between transfer medium 8 and outer layer 9. Additionally, to protect the hands of the welding operator from direct contact with the heating element, protective layer 35 can be provided on top of outer layer 9. Protective layer 35 can comprise a heat insulating substance. In some embodiments, the heating insulating substance can comprise Fibrafrax™ insulation, as manufactured by Plibrico of Chicago, Illinois, U.S.A. Fibrafrax™ insulation is fire retardant and, therefore, does not degrade under high temperature, which can make it suitable as an insulator for the heating collar application.

In other embodiments, collar 15 can further comprise outer housing 50 that can terminate with fastening means 55. Fastening means 55 can provide a mechanism for securing the collar around the piping. In some embodiments, fastening means 55 can comprise a Velcro™ portion that extends beyond first end 43 of outer housing 50. Fastening means 55 can further comprise second end 47 on outer housing 50. Second end 47 can attach to a portion of first end 43 thereby securing the heating collar around the piping.

For the purposes of this specification, the term "distal end" refers to first end 43 on outer housing 50. Similarly, the term "proximal end" refers to second end 47 on outer housing 50. In some embodiments, the distal end and the proximal end of each collar are located at each of the opposed ends of the collar. However, it is contemplated that first end 43 and second end 47 of fastening means 55 can be located anywhere along the length of outer housing 50.

It will be apparent to one skilled in the art that the scale and proportions of each heating collar can be adjusted to accommodate various dimensions of piping. For example, the circumferential length or diameter ("x") of the collar can be adjusted to accommodate various diameters of piping. Additionally, the width ("y") of the collar can be adjusted to provide a greater heating surface area on the piping and, additionally, to comply with regulatory standards with respect to heat treating and stress relieving of pipe welds.

It should be obvious to those skilled in the art that any geometry for fastening means 55 can be used. For example, the length of first end 43 can be adjusted to secure around various dimensions of piping. Additionally, second end 47 can also be adjusted to accommodate the modulated dimension of the first end. For example, a longer Velcro tab for first end 43 can be provided to accommodate larger dimensions of piping. Also, a greater Velcro fastening area for second end 47 can be provided to accommodate first end 43. In this way, the heating collar can be adjustable to accommodate a wide range of piping diameters.

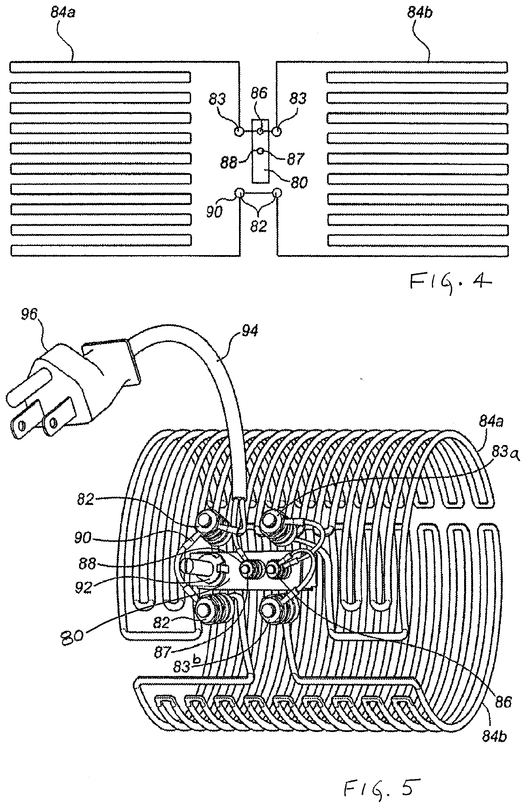

Referring to Figure 4, an electrical schematic is shown that represents the electrical circuitry of some embodiments of the apparatus described herein. Heating coils 84a and 84b represent the heating elements disposed within the heating collars and can be connected to connector terminals 82 and 83. Power line neutral 90 from an electrical power source (not shown) can be coupled to terminal 82. In some embodiments, the electric circuit can comprise thermostat 80. In such embodiments, terminals 83 can be coupled to terminal 86 on thermostat 80. Power line 88 from the electrical power source can be coupled to terminal 87 on thermostat 80. In other embodiments, the electric circuit can omit thermostat 80 wherein the source of electrical can be coupled to terminals 83.

In the illustrated embodiment shown in Figure 5, heating coils 84a and 84b can be connected to connector terminals 82 and 83. Connectors 82 can couple to power neutral line 90. Connectors 83 can couple to terminal 86 on thermostat 80. Power line 88 can couple to terminal 87 on thermostat 80. In this embodiment, thermostat 80 can be configured to be disposed within the heating collar in opening 36 as shown in Figure 2B and as described above. Power line 88 and neutral line 90 can be enclosed in cable 94 that can include power plug 96 located at a far end of cable 94 for plugging into an electrical power outlet (not shown). Thermostat control 92, as shown in this embodiment, can be a rotary control that can be used to set the desired temperature the heating collars are to heat a pipe to. It should be obvious to those skilled in the art that thermostat control 92 can be of any suitable type of control as used on thermostats.

In operation, thermostat 80 can close an internal electrical connection between terminals 86 and 87 (not shown) to allow electrical current to flow through heating coils 84a and 84b. As the heating coils heat the pipe, thermo couplers 80 can sense the temperature of the pipe. When the temperature of the pipe is approximately that of the preset temperature setting on thermostat control 92, thermostat 80 opens the electrical connection between terminals 86 and 87 to stop the flow of current through heating coils 84a and 84b thereby stopping the heating of the pipe beyond the preset temperature setting on thermostat control 92. As the pipe cools below the preset temperature, thermostat 80 can close the electrical connection between terminals 86 and 87 to commence heating of the pipe. As well known to those skilled in the art, this heating and cooling cycle can be repeated until electrical power is disconnected from the heating coils or until thermostat control 92 is adjusted to a new temperature setting whereby the heating and cooling cycle can adjust to the new temperature setting.

In some embodiments, the heating collar can omit thermostat 80 wherein neutral line 90 can couple to terminal 82 and power line 88 can couple to terminals 83a and 83b. This can be the case where the source of electrical is a nominal 110-120 VAC. In other embodiments, 220-240 VAC, 1-phase or 208 VAC, 3-phase electrical power can be the source of electrical power wherein terminals 83a and 83b can be coupled to separate terminals or phases of the source of electrical power.

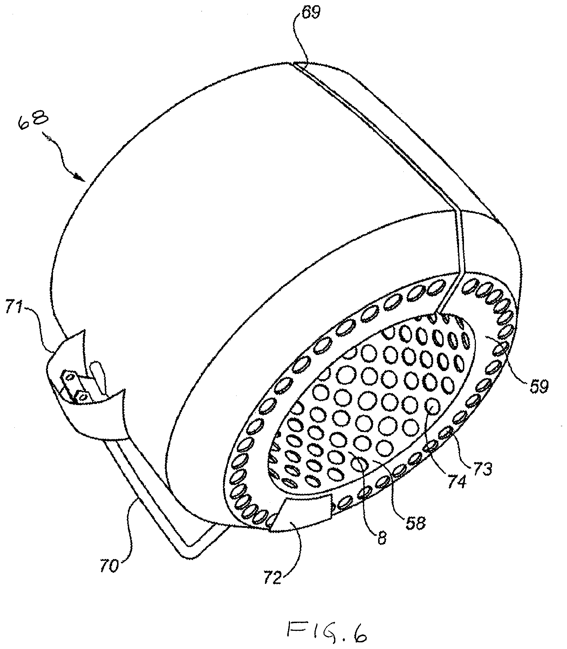

Referring to Figure 6, an alternate embodiment of a heating collar is shown in a closed position. In some embodiments, heating collar 68 can have a hard shell outer covering and can be comprised of two portions or approximate halves joined together by hinge 69 that can allow collar 68 to be opened and placed onto a pipe, and then closing collar 68 around the pipe. Collar 68 can further comprise handle 70 disposed thereon. Handle 70 can be grasped by an operator to open and close collar 68. In other embodiments, collar 68 can comprise input voltage plug 71 disposed on the outer surface of collar 68. Clasp 72 disposed on collar 68 can be used to secure the collar halves together after collar 68 has been placed on a pipe. In some embodiments, ventilation holes 73 can be disposed on inside surface 58 ton allow heat from heating element 74 to dissipate to the pipe. Ventilation holes 73 can also be disposed on sidewall 59 to allow air to circulate through collar 68. In other embodiments, collar 68 can omit voltage plug 71 and further comprise an electrical cable (not shown) entering collar 68 to provide a source of electrical power.

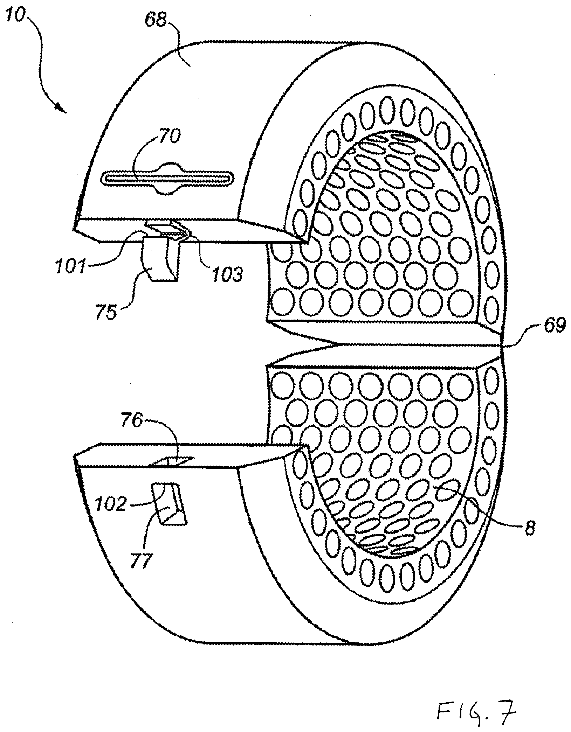

Referring to Figure 7, collar 68 is shown in an open position. In this embodiment, collar 68 can have a fastening mechanism that can include spring-loaded button 75 disposed on an upper half of collar 68 via spring 103. Collar 68 can also include opening 76 disposed on a lower half of collar 68. When collar 68 is closed around a pipe, button 75 can be inserted into opening 76 until button 75 is fully seated in opening 77 whereby edge 101 of button 75 catches edge 102 of opening 77 to secure the collar halves together. The spring tension of spring 103 can keep button 75 seated in opening 77. To open collar 68, button 75 can be depressed so that edge 101 clears edge 102 thereby allowing button 75 to be pulled from opening 76 as collar 68 is opened.

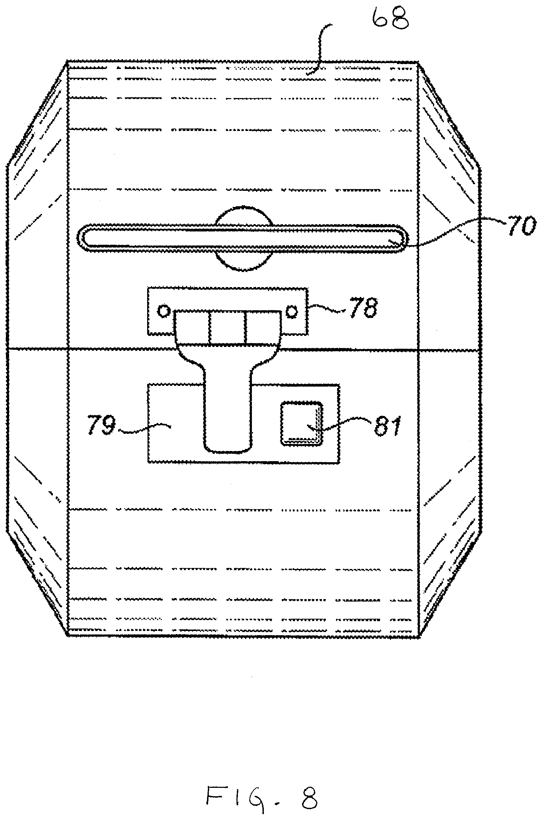

Referring to Figure 8, collar 68 is shown having an alternate fastening mechanism. In this embodiment, collar 68 can have a "briefcase-style latch" or "thumbcatch" comprising of spring-loaded latch clasp 78 and catch 79. To secure the halves of collar 68 together, clasp 78 can be inserted into and latched to catch 79. To open collar 68, release button 81 can be pushed in or pushed to one side to release clasp 78 from catch 79.

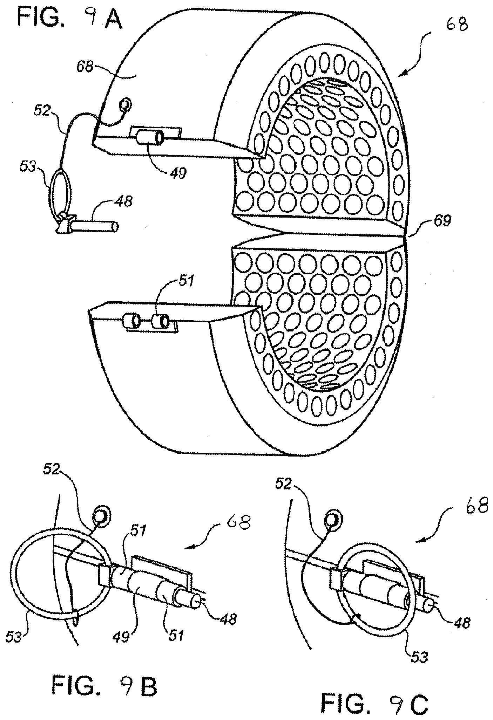

Referring to Figures 9A to 9C, collar 68 is shown having a further alternative fastening mechanism comprising of pin loops 49 and 51 disposed on the upper and lower collar halves, respectively, and lynch pin 48. In Figure 9A, collar 68 is shown in an open position. In Figure 9B, collar 68 is shown in a closed position with loop 49 disposed between loops 51 and lynch pin 48 inserted through loops 49 and 51 to secure the collar halves together. In Figure 9C, spring-loaded ring 53 is shown closed against lynch pin 48 to keep lynch pin 48 from sliding out of loops 49 and 51. In some embodiments, lynch pin 48 can be attached to collar 68 with line 52 having one end attached to collar 68 and the other end attached to ring 53. Line 52 can be a monofilament or stranded string or cable of suitable material as obvious to a person skilled in the art.

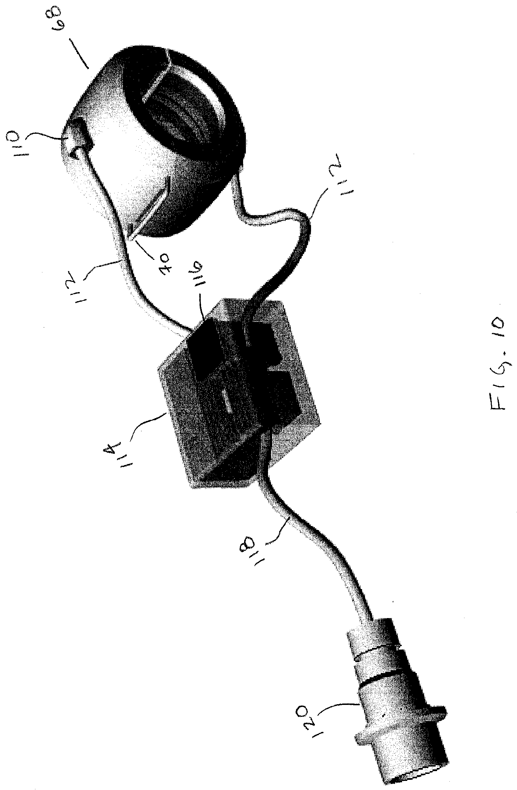

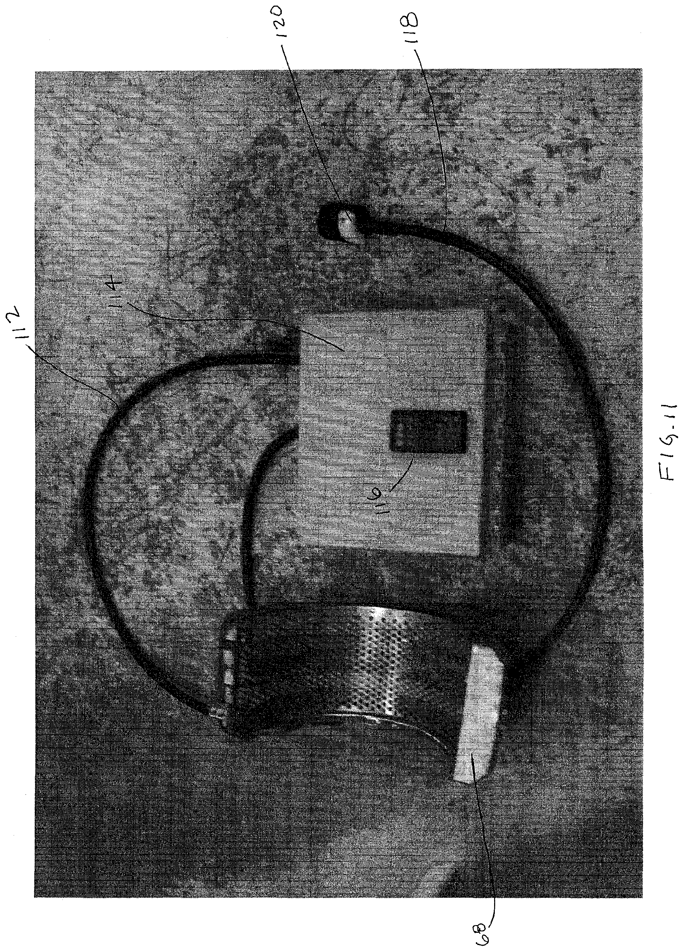

Referring to Figures 10 and 11, an embodiment of a heating collar and control unit is shown. In some embodiments, the apparatus can comprise at least one heating collar 68 that can be supplied power from control unit 114. Electrical cables 112 can provide electrical power from control unit 114 to collar 68, wherein cables 112 can enter collar 68 through strain relief couplers 110.

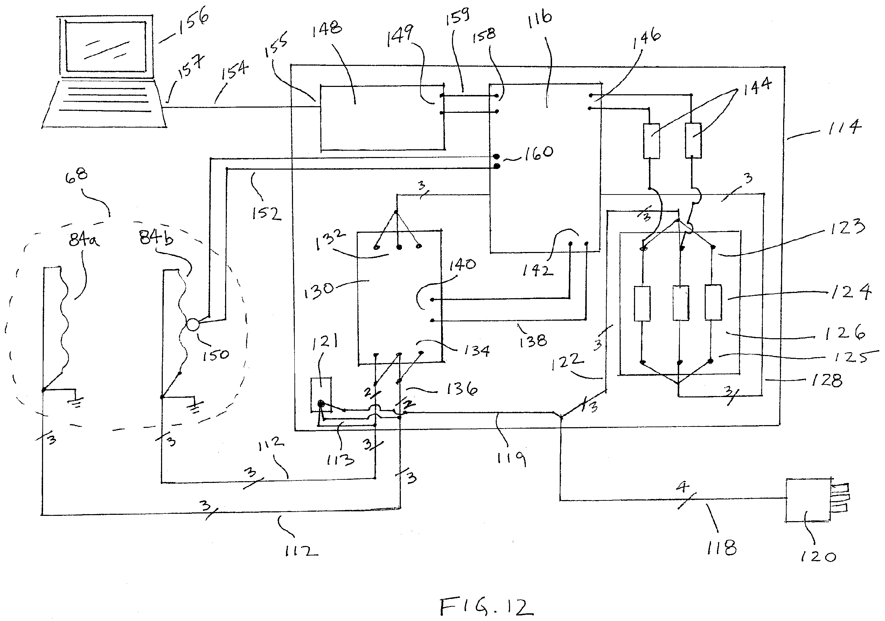

Referring to Figure 12, a block diagram of some embodiments of the apparatus is shown. According to the present invention, control unit 114 comprises digital controller 116, contactor 130 and fuse block 126. Representative examples of digital controller 116 can include the DC1000 series of digital controllers as manufactured by Honeywell International Inc. of Morristown, New Jersey, U.S.A., however, it is obvious to those skilled in the art that any functionally equivalent digital programmable temperature controller can be used.

Digital controller 116 is operatively coupled to contactor 130 via control wires 138 running between terminals 142 disposed on digital controller 116 and terminals 140 disposed on contactor 130 wherein digital controller 116 operates contactor 130 on and off to supply electrical power to heating coils 84a and 84b disposed in collar 68. For the purposes of this specification, the term "contactor" can include contactors, electro-mechanical relays, triacs, semiconductor devices or any other functionally equivalent mechanical, electro-mechanical or solid states devices that can turn and off the flow of electrical current passing there through, as well known to those skilled in the art. In a representative embodiment, contactor 130 can comprise a 3-phase contactor configured to pass 30 amps of electrical current per each phase, and can further comprise a 208-240 VAC operating coil that can be controlled by digital controller 116. Electrical power can be provided to contactor 130 by cable 118 connected to a source of electrical power via connector 120.

In the illustrated embodiment, connector 120 can connect to a source of 208 VAC, 3-phase power wherein cable 118 can comprise a 10/4 (4 conductors of 10-gauge insulated wires) cable. Three of the conductors of cable 118 can be connected to each of the 3 phases of electrical power and the fourth can be ground conductor 119 connected to ground connection tab 121 disposed in unit 114. In some embodiments, the electrical power supplied through cable 118 via conductors 122 can be first coupled to terminals 123 of fuses 124, one fuse for each phase, disposed on fuse block 126. In the illustrated embodiment, fuses 124 can comprise a 30-amp, 240-volt rating. The electrical power can then pass from terminals 125 of fuses 124 through wires 128 and couple to input terminals 132 disposed on contactor 130. Wires 136 of cables 112 can be coupled to output terminals 134 disposed on contactor 130 to supply power to heating coils 84a and 84b disposed in collar 68.

In a representative embodiment, cables 112 can comprise 10/3 (3 conductors of 10-gauge insulated wires) cable, wherein two conductors of each of cable 112 can be coupled to terminals 134, and the third conductor of each cable 112 can be ground conductors 113 coupled to ground connection tab 121.

In some embodiments, electrical power can be supplied to digital controller 116 by wires connecting power terminals 146 disposed on digital controller 116 to terminals 123. In other embodiments, the electrical power supplied to digital controller 116 can pass through fuses 144.

According to the present invention, unit 114 further comprises a thermocouple 150 disposed in collar 68 to measure temperature within collar 68 when heating a pipe. Thermocouple 150 can comprise a positive temperature coefficient resistor, a negative temperature coefficient resistor, a semiconductor device or any other functionally equivalent device as well known to those skilled in the art. Thermocouple 150 is coupled, according to the present invention, to digital controller 116 via control wires 152 coupled to thermocouple input terminals 160 disposed on digital controller 116. Wires 152 can be disposed in a separate cable running between unit 114 and collar 68 or they can be disposed or bundled in one or both of cables 112. In the illustrated embodiment, thermocouple is shown disposed by heating coil 84b although it is obvious to those skilled in the art that one or more thermocouples 150 can be disposed in collar 68, either proximal to one or both of heating coils 84a and 84b or in a location in collar 68 where the temperature therein can be measured.

In some embodiments, unit 114 can further comprise data logger 148 disposed therein and operatively connected to digital controller 116 by wires 159 connecting data-out terminals 158 disposed on digital controller 116 to data-in terminals 149 disposed on data logger 148. Data logger 148 can be configured to record the temperature sensed by thermocouple 150 disposed in collar 68 over time during a heating operation of a pipe or weld joint, and store the recorded temperature as a temperature reading in a computer-readable memory disposed in data logger 148. The temperature reading can further comprise the time the temperature reading was recorded by data logger 148. A representative example of a suitable data logger can be the model no. OM-CP-TC110-2MB Thermocouple Recorder as manufactured by Omega Engineering, Inc. of Stamford, Connecticut, U.S.A. or the model no. EL-USB-TC-LCD data logger as manufactured by Lascar Electronics Inc. of Erie, Pennsylvania, U.S.A. although it is obvious to those skilled in the art that any suitable and functionally equivalent data-logging device can be used as data logger 148.

In some embodiments, data logger 148 can be further configured to connect to computer 156 via data cable 154 connecting terminal 155 disposed on data logger 148 to terminal 157 disposed on computer 156. Terminals 155 and 157 can be Universal Serial Bus ("USB") or RS-232 serial communication connection terminals, as well known to those skilled in the art, or any other functionally equivalent data connector devices or standards. One or both of data logger 148 and computer 156 can further comprise computer firmware or software, as the case may be, to transfer the recorded temperature readings logged by data logger 148 to computer 156 to create an electronic record of a heating operation performed on a pipe or weld joint. Such electronic records can be used to verify that a particular pipe or weld joint has received a heating operation.

In operation, in some embodiments, digital controller 116 can control the electrical power supplied to collar 68, wherein a pipe or weld joint being heated by collar 68 can be heated to one or more predetermined temperatures over one or more predetermined periods of time.

According to the present invention, digital controller 116 is programmed to supply electrical power to collar 68 such that the pipe or weld joint can be heated to a predetermined temperature wherein the temperature can be increased or decreased over a predetermined period of time in addition to keeping the pipe or weld joint at predetermined temperature for a predetermined period of time.

For example, a pre-heating operation of a pipe prior to welding can comprise heating the pipe to approximately 121°C (250°F) for approximately 30 minutes. A hydrogen bake-out operation of a weld joint can comprise heating the weld joint to approximately 93°C (200°F) for approximately 1.5 hours. further and according to the present invention, a stress test of a weld joint comprises raising the temperature of the weld joint to approximately 593°C (1100°F) over approximately 30 minutes, keeping the temperature at 593°C (1100°F) for 2 to 4 hours and then decreasing the temperature to room or atmospheric temperature over approximately 30 minutes. Or, according to the present invention, a post weld treatment operation of a pipe after welding comprises first heating the pipe to 93°C (200°F) and then heating the pipe to 621 °C (1150°F) over a period of 30 minutes and then holding the pipe at this temperature for 2 to 4 hours followed by a 30 minute cool-down period to 93°C (200°F).

In the illustrated embodiment shown in Figure 12, unit 114 is shown configured to operate with 208 VAC, 3-phase electrical power. As collar 68 is shown comprising two heating coils, it is obvious to those skilled in the art that the apparatus is being operating in an "open delta" configuration, meaning that a load is being placed on only 2 of the 3 phases of the electrical power. If two or more units 114 are being operated using the same source of 3-phase electrical power, it is obvious to those skilled in the art that each of units 114 can be configured to couple the heating coils to different phases of the electrical power wherein the total load being placed on the 3-phase electrical power by two or more units 114 can be shared or balanced as best as possible. One method of achieving balance between two or more units 114 is to change the phases of the electrical power supplied to the heating coils on different units 114. This can be accomplished by re-arranging the order in which the power conductors disposed in cable 118 are connected to each of the 3-phase power connection terminals disposed in connector 120. As there are different ways to connect the conductors in cable 118 to the 3-phase power connection terminals in connector 120, unit 114 can be configured as 3 different types (for example, "Type 1", "Type 2" or "Type 3") depending on the order the power conductors of cable 118 are connected to the power connection terminals disposed in connector 120, as well known to those skilled in the art, as a means to balance the load placed on the source of 3-phase electrical power when two or more units 114 are being used and connected to the same source of electrical power. For example, when 2 units 114 are being used, a Type 1 unit and a Type 2 (or 3) unit can be used. When a third unit 114 is being used, a Type 3 (or 2) unit can be added. The cycle can continue if further units 114 are being use.

It is obvious to those skilled in the art that, in some embodiments, heating collar 68 can comprise three heating coils so as to provide a balanced or "closed delta" load on a source of 3-phase electrical power. In so doing, the need for provided different "types" of units 114, as described above, become diminished or eliminated when multiple units 114 are being used concurrently as each unit 114 can provide a fully balanced load on the 3-phase electrical power.

It is also obvious to those skilled in the art that unit 114 can be configured to supply 220-240 VAC, 1-phase electrical power to collar 68 wherein each 110-120 VAC leg or terminal of the electrical power can power one of heating coils 84a and 84b disposed in collar 68. It is also obvious to those skilled in the art that unit 114 can be configured to be coupled to, and supply electrical power to collar 68 from, a source of electrical power of a voltage greater than 208 VAC, 3-phase or 220-240 VAC, 1-phase. In such configurations, each of digital controller 116, fuses 125 and 144, and contactor 130 can be adapted or substituted with comparable components that are capable of operating at different voltages and currents to accomplish the same or similar function.

Although a few illustrative embodiments have been shown and described, those skilled in the art will appreciate that various changes and modifications might be made without departing from the scope of the invention as defined by the claims that follow.

## Claims

1. A heating apparatus (10) for heating a metal pipe or a metal pipe weld joint, comprising at least one heating collar (15) configured for being disposed around the pipe or weld joint, the at least one heating collar (15) configured for heating the metal pipe weld joint to a stress test temperature or to a post weld treatment temperature, wherein the at least one heating collar (15) further comprises a resistance wire network (23) which is capable of creating thermal heat energy when voltage is applied across the wire network (23), an inner core (7) configured to be contiguous with the pipe or weld joint, to absorb the thermal heat energy from the network (23) and to transfer the thermal heat energy to the pipe or weld joint, a protective layer providing a protective outer covering (50) for supporting and protecting the at least one heating collar (15) from the external environment, the protective layer (50) further comprising fastening means (55) for securing the at least one heating collar (15) securely around the pipe or weld joint, an inner core (7) for absorbing thermal heat energy from the network (23) and transferring the thermal heat energy to the pipe or weld joint, a heat transfer element (8), the heat transfer element (8) contiguous with the inner core (7) and configured to transfer thermal heat energy from the inner core (7) to the pipe or weld joint, an outer cover (9), the outer cover (9) providing a thermally conductive heat transfer substrate for transferring thermal heat energy from the inner core (7) to the pipe or weld joint, and an insulating layer (6), the insulating layer (6) providing a heat insulating layer for protecting the hands of a welding operator from direct thermal contact with the heat transfer element (8), the improved heating apparatus **characterised by**:
a) a controller unit (114) configured for connecting to a source of electrical power, the controller unit (114) operatively coupled to the at least one heating collar (15) and further configured for controlling the supply of electrical power to at least one heating collar (15);
b) a contactor (130) disposed in the controller unit (114) for controlling the supply of electrical power to the at least one heating collar (15);
c) a digital controller (116) disposed in the controller unit (114) configured for turning the contactor (130) on and off, the digital controller (116) further comprising a program for turning the contactor (130) on and off at predetermined times wherein the at least one heating collar (15) can heat the pipe or weld joint at the predetermined times; and
d) a thermocouple (150) disposed in the at least one heating collar (15), the thermocouple (150) configured to measure temperature in the at least one heating collar (15) during a heating operation of the pipe or weld joint, the thermocouple (150) operatively coupled to the digital controller (116) wherein the digital controller (116) is programmed for turning the contactor (130) on and off in response to the temperature measured by the thermocouple (150) to heat the pipe or weld joint to predetermined temperatures at the predetermined times, wherein the digital controller (116) is programmed to turn the contactor (130) on and off to heat the metal pipe weld joint to the stress test temperature of by raising the temperature to 1100°F (593.3°C) over 30 minutes, keeping the temperature at 1100°F (593.3°C) for 2 to 4 hours and then decreasing the temperature to room or atmospheric temperature over 30 minutes, or to heat the metal pipe weld joint according to a post weld treatment operation by first heating the metal pipe weld joint to 200°F (93.3°C) and then heating the metal pipe weld joint to 1150°F (621.1°C) over a 30-minute heating period and holding this temperature for 2 to 4 hours followed by a 30-minute cool-down period to 200°F (93.3°C).

2. The heating apparatus (10) as set forth in Claim 1, wherein the controller unit (114) further comprises an electrical power cable (118) having an electrical power connector (120) for connecting to the source of electrical power.

3. The heating apparatus (10) as set forth in Claim 2 in combination with a source of electrical power, wherein the source of electrical power comprises a voltage in the range of approximately 208 VAC to 240 VAC.

4. The heating apparatus (10) as set forth in any one of Claims 1 to 3, wherein the fastening means (55) comprises a first end (43) and a second end (47) disposed on the protective layer (50), the first end (43) comprising a Velcro™ tab secured to a distal end of the protective layer (50), and the second end (47) secured to a proximal end of the protective layer (50), the second end (47) comprising a Velcro receiving end for receiving the Velcro™ tab of the distal end for fastening the at least one heating collar (15) around the circumference of the pipe or weld joint.

5. The heating apparatus (10) as set forth in any one of Claims 1 to 3, wherein the protective outer covering (50) further comprises a hard shell (68), the hard shell (68) further comprising two portions or halves hinged together.

6. The heating apparatus (10) as set forth in Claim 5, wherein the fastening means (55) further comprises one or more of the group consisting of a spring- loaded button (75) disposed on one portion or half and an opening (77) for the button (75) disposed on the other portion or half, a thumb-catch (79) disposed on the hard shell portions or halves, and a lynch pin (48) and pin loops (49,51) disposed on the hard shell portions or halves.

7. The heating apparatus (10) as set forth in any one of Claims 1 to 6, further comprising a data logger (148) disposed in the controller unit (114), the data logger (148) operatively connected to the digital controller (116), the data logger (148) configured to record at least one temperature reading corresponding to the temperature in the at least one heating collar (15) during the heating operation, the at least one temperature reading comprising the time when the at least one temperature reading occurs.

8. The heating apparatus (10) as set forth in Claim 7, further comprising a computer (156) configured for operatively connecting to the data logger (148) and for retrieving the at least one temperature reading recorded by the data logger (148) during the heating operation from the data logger (148).

9. A method of heating a metal pipe or a metal pipe weld joint with a heating apparatus (10) comprising at least one heating collar (15) configured for being disposed around the pipe or weld joint, the at least one heating collar (15) configured for heating the metal pipe weld joint to a stress test temperature or to a post weld treatment temperature, the at least one heating collar (15) further comprising a resistance wire network (23) which is capable of creating thermal heat energy when voltage is applied across the wire network (23), an inner core (7) configured to be contiguous with the pipe or weld joint, to absorb the thermal heat energy from the network (23) and to transfer the thermal heat energy to the pipe or weld joint, a protective layer providing a protective outer covering (50) for supporting and protecting the least one heating collar (15) from the external environment, the protective layer (50) further comprising fastening means (55) for securing the at least one heating collar (15) securely around the pipe or weld joint, an inner core (7) for absorbing thermal heat energy from the network and transferring the thermal heat energy to the pipe or weld joint, a heat transfer element (8), the heat transfer element (8) contiguous with the inner core (7) and configured to transfer thermal heat energy from the inner core (7) to the pipe or weld joint, an outer cover (9), the outer cover (9) providing a thermally conductive heat transfer substrate for transferring thermal heat energy from the inner core (7) to the pipe or weld joint, and an insulating layer (6), the insulating layer (6) providing a heat insulating layer for protecting the hands of a welding operator from direct thermal contact with the heat transfer element, the method **characterised by**:
a) providing a controller unit (114) operatively coupled to the at least one heating collar (15), the controller unit (114) configured for connecting to a source of electrical power, the controller unit (114) operatively coupled to the at least one heating collar (15) and further configured for controlling the supply of electrical power to at least one heating collar (15);
b) providing a contactor (130) disposed in the controller unit (114) for controlling the supply of electrical power to the at least one heating collar (15);
c) providing a digital controller (116) disposed in the controller unit (114) configured for turning the contactor (13) on and off, the digital controller (116) further comprising a program for turning the contactor (130) on and off at predetermined times wherein the at least one heating collar (15) can heat the pipe or weld joint at the predetermined times;
d) providing a thermocouple (150) disposed in the at least one heating collar (15), the thermocouple (150) configured to measure temperature in the at least one heating collar (15) during the heating of the pipe or weld joint, the thermocouple (150) operatively coupled to the digital controller (116) wherein the digital controller (116) is configured for turning the contactor (130) on and off in response to the temperature measured by the thermocouple (150) to heat the pipe or weld joint to predetermined temperatures at the predetermined times;
e) placing the heating apparatus (10) around the pipe or weld joint;
f) connecting the heating apparatus (10) to the source of electrical power; and
g) turning on the heating apparatus (10) to heat the metal pipe weld joint to the stress test temperature by raising the temperature to 1100°F (593.3°C) over 30 minutes, keeping the temperature at 1100°F (593.3°C) for 2 to 4 hours and then decreasing the temperature to room or atmospheric temperature over 30 minutes, or to heat the metal pipe weld joint according to a post weld treatment operation by first heating the metal pipe weld joint to 200°F (93.3°C) and then heating the metal pipe weld joint to 1150°F (621.1°C) over a 30-minute heating period and holding this temperature for 2 to 4 hours followed by a 30-minute cool-down period to 200°F (93.3°C).

10. The method as set forth in Claim 9, wherein the controller unit (114) further comprises an electrical power cable having a electrical power connector for connecting to the source of electrical power.

11. The method as set forth in Claim 10, wherein the source of electrical power comprises a voltage in the range of approximately 208 VAC to 240 VAC.

12. The method as set forth in any one of Claims 9 to 11, further comprising the step of heating the pipe or weld joint to at least one predetermined temperature for a predetermined period of time during the heating of the pipe or weld joint.

13. The method as set forth in any one of Claims 9 to 12, wherein the heating apparatus (10) further comprises a data logger (148) disposed in the controller unit (114), the data logger (148) operatively connected to the digital controller (116), the data logger (148) configured to record at least one temperature reading corresponding to the temperature in the at least one heating collar (15) during the heating of the pipe or weld joint, the at least one temperature reading comprising the time when the at least one temperature reading occurs.

14. The method as set forth in Claim 13, wherein the heating apparatus (10) further comprises a computer (156) configured for operatively connecting to the data logger (148) and for retrieving the at least one temperature reading recorded by the data logger (148) during the heating of the pipe or weld joint from the data logger (148).

15. The method as set forth in Claim 14, further comprising the step of retrieving the at least one temperature reading recorded by the data logger (148) during the heating of the pipe or weld joint.

## Patentansprüche

1. Heizvorrichtung (10) zum Erwärmen eines Metallrohrs oder einer Metallrohrschweißverbindung, umfassend mindestens einen Heizkragen (15), der so ausgelegt ist, dass er um das Rohr oder die Schweißverbindung herum angeordnet ist, wobei der mindestens eine Heizkragen (15) ausgelegt ist, um die Metallrohrschweißverbindung auf eine Stresstesttemperatur oder eine Nachschweißbehandlungstemperatur zu erwärmen, wobei der mindestens eine Heizkragen (15) des Weiteren ein Widerstandsdrahtnetzwerk (23), das in der Lage ist, thermische Wärmeenergie zu erzeugen, wenn Spannung an das Drahtnetzwerk (23) angelegt wird, einen innren Kern (7), der ausgelegt ist, um angrenzend an das Rohr oder die Schweißverbindung zu sein, um die thermische Wärmeenergie von dem Netzwerk (23) zu absorbieren und die thermische Wärmeenergie an das Rohr oder die Schweißverbindung zu übertragen, eine Schutzschicht, die eine schützende Außenabdeckung (50) zum Halten des mindestens einen Heizkragens (15) und Schützen desselben vor der äußeren Umgebung bereitstellt, wobei die Schutzschicht (50) des Weiteren Befestigungsmittel (55) zum Sichern des mindestens einen Heizkragens (15) in sicherer Weise um das Rohr oder die Schweißverbindung herum umfasst, einen inneren Kern (7) zum Absorbieren von thermischer Wärmeenergie von dem Netzwerk (23) und Übertragen der thermischen Wärmeenergie auf das Rohr oder die Schweißverbindung, ein Wärmeübertragungselement (8), wobei das Wärmeübertragungselement (8) angrenzend an den inneren Kern (7) ist und ausgelegt ist, um thermische Wärmeenergie von dem inneren Kern (7) an das Rohr oder die Schweißverbindung zu übertragen, eine Außenabdeckung (9), wobei die Außenabdeckung (9) ein wärmeleitendes Wärmeübertragungssubstrat zum Übertragen von thermischer Wärmeenergie von dem inneren Kern (7) zu dem Rohr oder der Schweißverbindung bereitstellt, und eine Isolierschicht (6) umfasst, wobei die Isolierschicht (6) eine Wärmeisolierschicht zum Schützen der Hände einer Schweißbedienungsperson vor direktem thermischen Kontakt mit dem Wärmeübertragungselement (8) bereitstellt, wobei die verbesserte Heizvorrichtung **gekennzeichnet ist durch**:
a) eine Steuereinheit (114), die ausgelegt ist, um mit einer Quelle für elektrische Leistung verbunden zu werden, wobei die Steuereinheit (114) funktional an den mindestens einen Heizkragen (15) gekoppelt ist und des Weiteren ausgelegt ist, um die Zufuhr von elektrischer Leistung zu dem mindestens einen Heizkragen (15) zu steuern;
b) einen Schütz (130), der in der Steuereinheit (114) angeordnet ist, um die Zufuhr von elektrischer Leistung zu dem mindestens einen Heizkragen (15) zu steuern;
c) eine Digitalsteuerung (116), die in der Steuereinheit (114) angeordnet ist und ausgelegt ist, um den Schütz (130) ein- und auszuschalten, wobei die Digitalsteuerung (116) des Weiteren ein Programm zum Ein- und Ausschalten des Schützes (130) zu vorgegebenen Zeiten umfasst, wobei der mindestens eine Heizkragen (15) das Rohr oder die Schweißverbindung zu den vorgegebenen Zeiten erwärmen kann; und
d) ein Thermoelement (150), das in dem mindestens einen Heizkragen (15) angeordnet ist, wobei das Thermoelement (150) ausgelegt ist, um die Temperatur in dem mindestens einen Heizkragen (15) während eines Heizvorgangs des Rohrs oder der Schweißverbindung zu messen, wobei das Thermoelement (150) funktional an die Digitalsteuerung (116) gekoppelt ist, wobei die Digitalsteuerung (116) programmiert ist, um den Schütz (130) in Reaktion auf die von dem Thermoelement (150) gemessene Temperatur ein- und auszuschalten, um das Rohr oder die Schweißverbindung zu den vorgegebenen Zeiten auf vorgegebene Temperaturen zu erwärmen, wobei die Digitalsteuerung (116) programmiert ist, um den Schütz (130) ein- und auszuschalten, um die Metallrohrschweißverbindung auf die Stresstesttemperatur zu erwärmen, indem die Temperatur über 30 Minuten auf 593,3 °C (1100 °F) erhöht wird, die Temperatur 2 bis 4 Stunden lang auf 593,3 °C (1100 °F) gehalten wird, und dann die Temperatur über 30 Minuten auf Raumtemperatur oder atmosphärische Temperatur abgesenkt wird, oder um die Metallrohrschweißverbindung gemäß einem Nachschweißbehandlungsvorgang zu erwärmen, indem zuerst die Metallrohrschweißverbindung auf 93,3 °C (200 °F) erwärmt wird und dann die Metallrohrschweißverbindung über eine Heizperiode von 30 Minuten auf 621,1 °C (1150 °F) erwärmt wird und diese Temperatur 2 bis 4 Stunden gehalten wird, gefolgt von einer Abkühlperiode von 30 Minuten auf 93,3 °C (200 °F).

2. Heizvorrichtung (10) nach Anspruch 1, wobei die Steuereinheit (114) des Weiteren ein elektrisches Leistungkabel (118) mit einem elektrischen Leistungsteckverbinder (120) zum Verbinden mit der Quelle für elektrische Leistung umfasst.

3. Heizvorrichtung (10) nach Anspruch 2 in Kombination mit einer Quelle für elektrische Leistung, wobei die Quelle für elektrische Leistung eine Spannung im Bereich von ungefähr 208 VAC bis 240 VAC umfasst.

4. Heizvorrichtung (10) nach einem der Ansprüche 1 bis 3, wobei das Befestigungsmittel (55) ein erstes Ende (43) und ein zweites Ende (47) umfasst, das auf der Schutzschicht (50) angeordnet ist, wobei das erste Ende (43) eine Lasche aus Klettmaterial Velcro™ umfasst, die an einem entfernten Ende der Schutzschicht (50) gesichert ist, und wobei das zweite Ende (47) an einem nahen Ende der Schutzschicht (50) gesichert ist, wobei das zweite Ende (47) ein Velcro-annehmendes Ende zum Annehmen der Velcro™-Lasche des entfernen Endes zum Befestigen des mindestens einen Heizkragens (15) um den Umfang des Rohrs oder der Schweißverbindung herum umfasst.

5. Heizvorrichtung (10) nach einem der Ansprüche 1 bis 3, wobei die schützende Außenabdeckung (50) des Weiteren einen Hartmantel (68) umfasst, wobei der Hartmantel (68) des Weiteren zwei gelenkig miteinander verbundene Anteile oder Hälften umfasst.

6. Heizvorrichtung (10) nach Anspruch 5, wobei das Befestigungsmittel (55) des Weiteren einen oder mehrere von der Gruppe bestehend aus einem federgelagerten Knopf (75), der auf einem Anteil oder einer Hälfte angeordnet ist, und einer Öffnung (77) für den Knopf (75), die auf dem anderen Anteil oder der anderen Hälfte angeordnet ist, einer Verschlussklinke (79), die auf den Hartmantelanteilen oder -hälften angeordnet ist, und einem Klappsplint (48) und Splintschlaufen (49, 51) umfasst, die auf den Hartmantelanteilen oder -hälften angeordnet sind.

7. Heizvorrichtung (10) nach einem der Ansprüche 1 bis 6, des Weiteren umfassend einen Datenlogger (148), der in der Steuereinheit (114) angeordnet ist, wobei der Datenlogger (148) funktional mit der Digitalsteuerung (116) verbunden ist, wobei der Datenlogger (148) ausgelegt ist, um mindestens eine Temperaturablesung, die der Temperatur in dem mindestens einen Heizkragen (15) entspricht, während des Heizvorgangs aufzuzeichnen, wobei die mindestens eine Temperaturablesung die Zeit umfasst, bei der die mindestens eine Temperaturablesung stattfindet.

8. Heizvorrichtung (10) nach Anspruch 7, des Weiteren umfassend einen Computer (156), der ausgelegt ist, um funktional mit dem Datenlogger (148) verbunden zu sein und die mindestens eine Temperaturablesung, die durch den Datenlogger (148) während des Heizvorgangs aufgezeichnet wurde, von dem Datenlogger (148) abzurufen.

9. Verfahren zum Erwärmen eines Metallrohrs oder einer Metallrohrschweißverbindung mit einer Heizvorrichtung (10), umfassend mindestens einen Heizkragen (15), der so ausgelegt ist, dass er um das Rohr oder die Schweißverbindung herum angeordnet wird, wobei der mindestens eine Heizkragen (15) ausgelegt ist, um die Metallrohrschweißverbindung auf eine Stresstesttemperatur oder eine Nachschweißbehandlungstemperatur zu erwärmen, wobei der mindestens eine Heizkragen (15) des Weiteren ein Widerstandsdrahtnetzwerk (23), das in der Lage ist, thermische Wärmeenergie zu erzeugen, wenn Spannung an das Drahtnetzwerk (23) angelegt wird, einen inneren Kern (7), der ausgelegt ist, um angrenzend an das Rohr oder die Schweißverbindung zu sein, um die thermische Wärmeenergie von dem Netzwerk (23) zu absorbieren und die thermische Wärmeenergie an das Rohr oder die Schweißverbindung zu übertragen, eine Schutzschicht, die eine schützende Außenabdeckung (50) zum Halten des mindestens einen Heizkragens (15) und Schützen desselben vor der äußeren Umgebung bereitstellt, wobei die Schutzschicht (50) des Weiteren Befestigungsmittel (55) zum Sichern des mindestens einen Heizkragens (15) in sicherer Weise um das Rohr oder die Schweißverbindung herum umfasst, einen inneren Kern (7) zum Absorbieren von thermischer Wärmeenergie von dem Netzwerk und Übertragen der thermischen Wärmeenergie auf das Rohr oder die Schweißverbindung, ein Wärmeübertragungselement (8), wobei das Wärmeübertragungselement (8) angrenzend an den inneren Kern (7) ist und ausgelegt ist, um thermische Wärmeenergie von dem inneren Kern (7) an das Rohr oder die Schweißverbindung zu übertragen, eine Außenabdeckung (9), wobei die Außenabdeckung (9) ein wärmeleitendes Wärmeübertragungssubstrat zum Übertragen von thermischer Wärmeenergie von dem inneren Kern (7) zu dem Rohr oder der Schweißverbindung bereitstellt, und eine Isolierschicht (6) umfasst, wobei die Isolierschicht (6) eine Wärmeisolierschicht zum Schützen der Hände einer Schweißbedienungsperson vor direktem thermischen Kontakt mit dem Wärmeübertragungselement bereitstellt, wobei das Verfahren **gekennzeichnet ist durch**:
a) Bereitstellen einer Steuereinheit (114), die funktional mit dem mindestens einen Heizkragen (15) gekoppelt ist, wobei die Steuereinheit (114) ausgelegt ist, um mit einer Quelle für elektrische Leistung verbunden zu werden, wobei die Steuereinheit (114) funktional an den mindestens einen Heizkragen (15) gekoppelt ist und des Weiteren ausgelegt ist, um die Zufuhr der elektrischen Leistung zu mindestens einem Heizkragen (15) zu steuern;
b) Bereitstellen eines Schützes (130), der in der Steuereinheit (114) angeordnet ist, um die Zufuhr von elektrischer Leistung zu dem mindestens einen Heizkragen (15) zu steuern;
c) Bereitstellen einer Digitalsteuerung (116), die in der Steuereinheit (114) angeordnet ist und ausgelegt ist, um den Schütz (13) ein- und auszuschalten, wobei die Digitalsteuerung (116) des Weiteren ein Programm zum Ein- und Ausschalten des Schützes (130) zu vorgegebenen Zeiten umfasst, wobei der mindestens eine Heizkragen (15) das Rohr oder die Schweißverbindung zu den vorgegebenen Zeiten erwärmen kann;
d) Bereitstellen eines Thermoelements (150), das in dem mindestens einen Heizkragen (15) angeordnet ist, wobei das Thermoelement (150) ausgelegt ist, um die Temperatur in dem mindestens einen Heizkragen (15) während des Erwärmens des Rohrs oder der Schweißverbindung zu messen, wobei das Thermoelement (150) funktional an die Digitalsteuerung (116) gekoppelt ist, wobei die Digitalsteuerung (116) ausgelegt ist, um den Schütz (130) in Reaktion auf die **durch** das Thermoelement (150) gemessene Temperatur ein- und auszuschalten, um das Rohr oder die Schweißverbindung zu den vorgegebenen Zeiten auf vorgegebene Temperaturen zu erwärmen;
e) Platzieren der Heizvorrichtung (10) um das Rohr oder die Schweißverbindung herum;
f) Verbinden der Heizvorrichtung (10) mit der Quelle für elektrische Leistung; und
g) Einschalten der Heizvorrichtung (10), um die Metallrohrschweißverbindung auf die Stresstesttemperatur zu erwärmen, indem die Temperatur über 30 Minuten auf 593,3 °C (1100 °F) erhöht wird, die Temperatur 2 bis 4 Stunden auf 593,3 °C (1100 °F) gehalten wird, und die Temperatur dann über 30 Minuten auf Raumtemperatur oder atmosphärische Temperatur abgesenkt wird, oder um die Metallrohrschweißverbindung gemäß einem Nachschweißbehandlungsvorgang zu erwärmen, indem zuerst die Metallrohrschweißverbindung auf 93,3 °C (200 °F) erwärmt wird und dann die Metallrohrschweißverbindung über eine Heizperiode von 30 Minuten auf 621,1 °C (1150 °F) erwärmt wird und diese Temperatur 2 bis 4 Stunden gehalten wird, gefolgt von einer Abkühlperiode von 30 Minuten auf 93,3 °C (200 °F).

10. Verfahren nach Anspruch 9, wobei die Steuereinheit (114) des Weiteren ein elektrisches Leistungkabel mit einem elektrischen Leistungsteckverbinder zum Verbinden mit der Quelle für elektrische Leistung umfasst.

11. Verfahren nach Anspruch 10, wobei die Quelle für elektrische Leistung eine Spannung im Bereich von ungefähr 208 VAC bis 240 VAC umfasst.

12. Verfahren nach einem der Ansprüche 9 bis 11, des Weiteren umfassend den Schritt des Erwärmens des Rohrs oder der Schweißverbindung auf mindestens eine vorgegebene Temperatur für eine vorgegebene Zeitperiode während des Erwärmens des Rohrs oder der Schweißverbindung.

13. Verfahren nach einem der Ansprüche 9 bis 12, wobei die Heizvorrichtung (10) des Weiteren einen Datenlogger (148) umfasst, der in der Steuereinheit (114) angeordnet ist, wobei der Datenlogger (148) funktional mit der Digitalsteuerung (116) verbunden ist, wobei der Datenlogger (148) ausgelegt ist, um mindestens eine Temperaturablesung, die der Temperatur in dem mindestens einen Heizkragen (15) entspricht, während des Erwärmens des Rohrs oder der Schweißverbindung aufzuzeichnen, wobei die mindestens eine Temperaturablesung die Zeit umfasst, bei der die mindestens eine Temperaturablesung stattfindet.

14. Verfahren nach Anspruch 13, wobei die Heizvorrichtung (10) des Weiteren einen Computer (156) umfasst, der ausgelegt ist, um funktional mit dem Datenlogger (148) verbunden zu werden und die mindestens eine Temperaturablesung, die durch den Datenlogger (148) während des Erwärmens des Rohrs oder der Schweißverbindung aufgezeichnet wurde, von dem Datenlogger (148) abzurufen.

15. Verfahren wie in Anspruch 14 beschrieben, des Weiteren umfassend den Schritt des Abrufens der mindestens einen Temperaturablesung, die durch den Datenlogger (148) während des Erwärmens des Rohrs oder der Schweißverbindung aufgezeichnet wurde.

## Revendications

1. Appareil chauffant (10) pour chauffer un tuyau en métal ou un joint de soudure de tuyau en métal, comprenant au moins un collier chauffant (15) configuré pour être disposé autour du tuyau ou joint de soudure, l'au moins un collier chauffant (15) étant configuré pour chauffer le joint de soudure de tuyau en métal jusqu'à une température d'essai de résistance ou jusqu'à une température de traitement après soudage, dans lequel l'au moins un collier chauffant (15) comprend en outre un réseau de fil de résistance (23) qui est capable de créer de l'énergie de chaleur thermique lorsqu'une tension est appliquée sur le réseau de fil (23), une âme intérieure (7) configurée pour être contiguë au tuyau ou joint de soudure, pour absorber l'énergie de chaleur thermique provenant du réseau (23) et pour transférer l'énergie de chaleur thermique au tuyau ou joint de soudure, une couche protectrice fournissant une couverture extérieure protectrice (50) pour supporter et protéger l'au moins un collier chauffant (15) de l'environnement externe, la couche protectrice (50) comprenant en outre un moyen de fixation (55) pour fixer l'au moins un collier chauffant (15) fermement autour du tuyau ou joint de soudure, une âme intérieure (7) pour absorber de l'énergie de chaleur thermique provenant du réseau (23) et transférer l'énergie de chaleur thermique au tuyau ou joint de soudure, un élément de transfert de chaleur (8), l'élément de transfert de chaleur (8) étant contigu à l'âme intérieure (7) et configuré pour transférer de l'énergie de chaleur thermique provenant de l'âme intérieure (7) au tuyau ou joint de soudure, un revêtement extérieur (9), le revêtement extérieur (9) fournissant un substrat de transfert de chaleur thermiquement conducteur pour transférer de l'énergie de chaleur thermique provenant de l'âme intérieure (7) au tuyau ou joint de soudure, et une couche isolante (6), la couche isolante (6) fournissant une couche isolante contre la chaleur pour protéger les mains d'un opérateur de soudage d'un contact thermique direct avec l'élément de transfert de chaleur (8), l'appareil chauffant amélioré étant **caractérisé par** :
a) une unité à dispositif de commande (114) configurée pour se connecter à une source de puissance électrique, l'unité à dispositif de commande (114) étant fonctionnellement couplée à l'au moins un collier chauffant (15) et en outre configurée pour commander l'alimentation en puissance électrique à au moins un collier chauffant (15) ;
b) un contacteur (130) disposé dans l'unité à dispositif de commande (114) pour commander l'alimentation en puissance électrique à l'au moins un collier chauffant (15) ;
c) un dispositif de commande numérique (116) disposé dans l'unité à dispositif de commande (114), configuré pour allumer et éteindre le contacteur (130), le dispositif de commande numérique (116) comprenant en outre un programme pour allumer et éteindre le contacteur (130) à des instants prédéterminés, dans lequel l'au moins un collier chauffant (15) peut chauffer le tuyau ou joint de soudure aux instants prédéterminés ; et
d) un thermocouple (150) disposé dans l'au moins un collier chauffant (15), le thermocouple (150) étant configuré pour mesurer la température dans l'au moins un collier chauffant (15) durant une opération de chauffage du tuyau ou joint de soudure, le thermocouple (150) étant fonctionnellement couplé au dispositif de commande numérique (116), dans lequel le dispositif de commande numérique (116) est programmé pour allumer et éteindre le contacteur (130) en réponse à la température mesurée par le thermocouple (150) pour chauffer le tuyau ou joint de soudure jusqu'à des températures prédéterminées aux instants prédéterminés, dans lequel le dispositif de commande numérique (116) est programmé pour allumer et éteindre le contacteur (130) pour chauffer le joint de soudure de tuyau en métal jusqu'à la température d'essai de résistance en augmentant la température jusqu'à 1100°F (593,3°C) au cours d'une période de 30 minutes, en maintenant la température à 1100°F (593,3°C) pendant 2 à 4 heures et puis en réduisant la température jusqu'à la température ambiante ou atmosphérique au cours d'une période de 30 minutes, ou pour chauffer le joint de soudure de tuyau en métal selon une opération de traitement après soudage en chauffant premièrement le joint de soudure de tuyau en métal jusqu'à 200°F (93,3°C) et puis en chauffant le joint de soudure de tuyau en métal jusqu'à 1150°F (621,1°C) au cours d'une période chauffage de 30 minutes et en maintenant cette température pendant 2 à 4 heures, suivi par une période de refroidissement de 30 minutes jusqu'à 200°F (93,3°C).

2. Appareil chauffant (10) selon la revendication 1, dans lequel l'unité à dispositif de commande (114) comprend en outre un câble de puissance électrique (118) ayant un connecteur de puissance électrique (120) pour se connecter à la source de puissance électrique.

3. Appareil chauffant (10) selon la revendication 2 en association avec une source de puissance électrique, dans lequel la source de puissance électrique comprend une tension dans la plage d'approximativement 208 VAC à 240 VAC.

4. Appareil chauffant (10) selon l'une quelconque des revendications 1 à 3, dans lequel le moyen de fixation (55) comprend une première extrémité (43) et une seconde extrémité (47) disposées sur la couche protectrice (50), la première extrémité (43) comprenant une languette Velcro™ fixée à une extrémité distale de la couche protectrice (50), et la seconde extrémité (47) étant fixée à une extrémité proximale de la couche protectrice (50), la seconde extrémité (47) comprenant une extrémité de réception Velcro pour recevoir la languette Velcro™ de l'extrémité distale pour fixer l'au moins un collier chauffant (15) autour de la circonférence du tuyau ou joint de soudure.

5. Appareil chauffant (10) selon l'une quelconque des revendications 1 à 3, dans lequel la couverture extérieure protectrice (50) comprend en outre une coque extérieure (68), la coque extérieure (68) comprenant en outre deux parties ou moitiés articulées ensemble.

6. Appareil chauffant (10) selon la revendication 5, dans lequel le moyen de fixation (55) comprend en outre un ou plusieurs du groupe constitué d'un bouton à ressort (75) disposé sur une partie ou moitié et d'une ouverture (77) pour le bouton (75) disposée sur l'autre partie ou moitié, un taquet à pouce (79) disposé sur les parties ou moitiés de coque extérieure, et une cheville (48) et des boucles à cheville (49, 51) disposées sur les parties ou moitiés de coque extérieure.

7. Appareil chauffant (10) selon l'une quelconque des revendications 1 à 6, comprenant en outre un enregistreur de données (148) disposé dans l'unité à dispositif de commande (114), l'enregistreur de données (148) étant fonctionnellement connecté au dispositif de commande numérique (116), l'enregistreur de données (148) étant configuré pour enregistrer au moins une mesure de température correspondant à la température dans l'au moins un collier chauffant (15) durant l'opération de chauffage, l'au moins une mesure de température comprenant l'instant auquel l'au moins une mesure de température se produit.

8. Appareil chauffant (10) selon la revendication 7, comprenant en outre un ordinateur (156) configuré pour se connecter fonctionnellement à l'enregistreur de données (148) et pour récupérer l'au moins une mesure de température enregistrée par l'enregistreur de données (148) durant l'opération de chauffage à partir de l'enregistreur de données (148).

9. Procédé de chauffage d'un tuyau en métal ou d'un joint de soudure de tuyau en métal avec un appareil chauffant (10) comprenant au moins un collier chauffant (15) configuré pour être disposé autour du tuyau ou joint de soudure, l'au moins un collier chauffant (15) étant configuré pour chauffer le joint de soudure de tuyau en métal jusqu'à une température d'essai de résistance ou jusqu'à une température de traitement après soudage, l'au moins un collier chauffant (15) comprenant en outre un réseau de fil de résistance (23) qui est capable de créer de l'énergie de chaleur thermique lorsqu'une tension est appliquée sur le réseau de fil (23), une âme intérieure (7) configurée pour être contiguë au tuyau ou joint de soudure, pour absorber de l'énergie de chaleur thermique provenant du réseau (23) et pour transférer l'énergie de chaleur thermique au tuyau ou joint de soudure, une couche protectrice fournissant une couverture extérieure protectrice (50) pour supporter et protéger l'au moins un collier chauffant (15) de l'environnement externe, la couche protectrice (50) comprenant en outre un moyen de fixation (55) pour fixer l'au moins un collier chauffant (15) fermement autour du tuyau ou joint de soudure, une âme intérieure (7) pour absorber de l'énergie de chaleur thermique provenant du réseau et transférer l'énergie de chaleur thermique au tuyau ou joint de soudure, un élément de transfert de chaleur (8), l'élément de transfert de chaleur (8) étant contigu à l'âme intérieure (7) et configuré pour transférer de l'énergie de chaleur thermique provenant de l'âme intérieure (7) au tuyau ou joint de soudure, un revêtement extérieur (9), le revêtement extérieur (9) fournissant un substrat de transfert de chaleur thermiquement conducteur pour transférer l'énergie de chaleur thermique provenant de l'âme intérieure (7) au tuyau ou joint de soudure, et une couche isolante (6), la couche isolante (6) fournissant une couche isolante contre la chaleur pour protéger les mains d'un opérateur de soudage d'un contact thermique direct avec l'élément de transfert de chaleur, le procédé étant **caractérisé par** :
a) la fourniture d'une unité à dispositif de commande (114) fonctionnellement couplée à l'au moins un collier chauffant (15), l'unité à dispositif de commande (114) étant configurée pour se connecter à une source de puissance électrique, l'unité à dispositif de commande (114) étant fonctionnellement couplée à l'au moins un collier chauffant (15) et en outre configurée pour commander l'alimentation en puissance électrique à au moins un collier chauffant (15) ;
b) la fourniture d'un contacteur (130) disposé dans l'unité à dispositif de commande (114) pour commander l'alimentation en puissance électrique à l'au moins un collier chauffant (15) ;
c) la fourniture d'un dispositif de commande numérique (116) disposé dans l'unité à dispositif de commande (114), configuré pour allumer et éteindre le contacteur (13), le dispositif de commande numérique (116) comprenant en outre un programme pour allumer et éteindre le contacteur (130) à des instants prédéterminés, dans lequel l'au moins un collier chauffant (15) peut chauffer le tuyau ou joint de soudure aux instants prédéterminés ;
d) la fourniture d'un thermocouple (150) disposé dans l'au moins un collier chauffant (15), le thermocouple (150) étant configuré pour mesurer une température dans l'au moins un collier chauffant (15) durant le chauffage du tuyau ou joint de soudure, le thermocouple (150) étant fonctionnellement couplé au dispositif de commande numérique (116), dans lequel le dispositif de commande numérique (116) est configuré pour allumer et éteindre le contacteur (130) en réponse à la température mesurée par le thermocouple (150) pour chauffer le tuyau ou joint de soudure jusqu'à des températures prédéterminées aux instants prédéterminés ;
e) le placement de l'appareil chauffant (10) autour du tuyau ou joint de soudure ;
f) la connexion de l'appareil chauffant (10) à la source de puissance électrique ; et
g) l'allumage de l'appareil chauffant (10) pour chauffer le joint de soudure de tuyau en métal jusqu'à la température d'essai de résistance en augmentant la température jusqu'à 1100°F (593,3°C) au cours d'une période de 30 minutes, en maintenant la température à 1100°F (593,3°C) pendant 2 à 4 heures et puis en réduisant la température jusqu'à la température ambiante ou atmosphérique au cours d'une période 30 minutes, ou pour chauffer le joint de soudure de tuyau en métal selon une opération de traitement après soudage en chauffant premièrement le joint de soudure de tuyau en métal jusqu'à 200°F (93,3°C) et puis en chauffant le joint de soudure de tuyau en métal jusqu'à 1150°F (621,1 °C) au cours d'une période de chauffage de 30 minutes et en maintenant cette température pendant 2 à 4 heures, suivi par une période de refroidissement de 30 minutes jusqu'à 200°F (93,3°C).

10. Procédé selon la revendication 9, dans lequel l'unité à dispositif de commande (114) comprend en outre un câble de puissance électrique ayant un connecteur de puissance électrique pour se connecter à la source de puissance électrique.

11. Procédé selon la revendication 10, dans lequel la source de puissance électrique comprend une tension dans la plage d'approximativement 208 VAC à 240 VAC.

12. Procédé selon l'une quelconque des revendications 9 à 11, comprenant en outre l'étape de chauffage du tuyau ou joint de soudure jusqu'au moins une température prédéterminée pendant une période prédéterminée durant le chauffage du tuyau ou joint de soudure.

13. Procédé selon l'une quelconque des revendications 9 à 12, dans lequel l'appareil chauffant (10) comprend en outre un enregistreur de données (148) disposé dans l'unité à dispositif de commande (114), l'enregistreur de données (148) étant fonctionnellement connecté au dispositif de commande numérique (116), l'enregistreur de données (148) étant configuré pour enregistrer au moins une mesure de température correspondant à la température dans l'au moins un collier chauffant (15) durant le chauffage du tuyau ou joint de soudure, l'au moins une mesure de température comprenant l'instant auquel l'au moins une mesure de température se produit.

14. Procédé selon la revendication 13, dans lequel l'appareil chauffant (10) comprend en outre un ordinateur (156) configuré pour se connecter fonctionnellement à l'enregistreur de données (148) et pour récupérer l'au moins une mesure de température enregistrée par l'enregistreur de données (148) durant le chauffage du tuyau ou joint de soudure à partir de l'enregistreur de données (148).

15. Procédé selon la revendication 14, comprenant en outre l'étape de la récupération de l'au moins une mesure de température enregistrée par l'enregistreur de données (148) durant le chauffage du tuyau ou joint de soudure.
